# EUROPÄISCHE PATENTSCHRIFT

(11) **EP 2 395 392 B1**
(45) Veröffentlichungstag und Bekanntmachung des Hinweises auf die Patenterteilung: **06.12.2017**
(21) Anmeldenummer: 11004623.2
(22) Anmeldetag: 07.06.2011
(51) Int. Cl.: G03B 11/00, G03B 35/08, H04N 5/33, H04N 9/04, H04N 13/02, G06T 7/571, G02B 5/20

(54) **Kameraobjektiv und Kamerasystem mit einer Maske zur Ermittlung von Tiefeninformation**
Camera lens and camera system with a mask for determining depth information
Objectif de caméra et système de caméra avec un masque pour déterminer des informations de profondeur

(30) Priorität: 10.06.2010 DE 102010023344
(43) Veröffentlichungstag der Anmeldung: 14.12.2011
(73) Patentinhaber: Arnold&Richter Cine Technik GmbH&Co. Betriebs KG, 80799 München (DE)
(72) Erfinder: Steurer, Johannes, 84034 Landshut (DE)
(74) Vertreter: Manitz Finsterwald Patentanwälte PartmbB

(56) Entgegenhaltungen:
- EP-A2- 1 956 410
- WO-A1-2005/083506
- CN-A- 101 241 173
- DE-A1-102004 016 224
- US-A- 5 168 327
- US-A1- 2006 092 314
- US-A1- 2008 259 354
- US-A1- 2010 066 854

## Beschreibung

Die vorliegende Erfindung betrifft ein Kameraobjektiv für eine Kamera, mit einer Maske mit mehreren Maskierungsabschnitten. Ferner betrifft die Erfindung ein Kamerasystem, mit einer digitalen Kamera, insbesondere einer digitalen Filmkamera, zum Aufnehmen von Bildern.

Sowohl bei Stillbildkameras als auch bei Bewegtbildkameras ist es wünschenswert, zusätzlich zu den zweidimensionalen Bildinformationen auch Informationen über die Bildtiefe oder Tiefeninformationen des aufgenommenen Motivs zu gewinnen. Die Verfügbarkeit von Tiefeninformationen ist für verschiedene Anwendungen sinnvoll. Beispielhaft seien hier eine Unterstützung oder Automatisierung des Fokussiervorgangs des Objektivs und Anwendungen im Bereich der visuellen Effekte genannt, welche in der Postproduktion digital mit Hilfe von Computern auf der Grundlage realer Bilddaten erzeugt werden. Beispiele für visuelle Effekte sind das Freistellen von Objekten aufgrund ihrer Entfernung zur aufnehmenden Kamera und das räumlich korrekte Platzieren von computergenerierten Objekten in der mittels der Kamera aufgenommenen realen Szene. Für derartige visuelle Effekte ist das Vorliegen einer vollständigen Tiefenkarte zu dem jeweiligen Bild wünschenswert, d.h. möglichst für jeden Bildpunkt soll eine Tiefeninformation vorliegen, damit das virtuelle Objekt möglichst realitätsnah in die reale Szene eingefügt werden kann.

Zur Gewinnung von Tiefeninformationen sind verschiedene Verfahren allgemein bekannt. Ein Beispiel dafür ist die Stereotriangulation, bei der neben einem Hauptabbildungsstrahlengang ein axial dazu versetzter zweiter Strahlengang mit einem eigenen Objektiv und Bildsensor vorgesehen wird. Da das Objektiv im zweiten Strahlengang unabhängig von dem Objektiv im Hauptstrahlengang ist, kann es insbesondere hinsichtlich der Fokussierung oder des Bildwinkels zu Abweichungen zwischen beiden Objektiven oder auch zu Abschattungen kommen. Dies beeinträchtigt die Genauigkeit der Triangulationsberechnung.
Weitere Verfahren zur Gewinnung von Tiefeninformation verwenden eine strukturierte Beleuchtung, wobei die aufzunehmende Szene mit einem bekannten Muster beleuchtet wird und von einer Kamera unter einem von dem Beleuchtungswinkel verschiedenen Blickwinkel aufgenommen wird. Andere Verfahren beruhen auf dem Prinzip der Lichtlaufzeitmessung, bei der die aufzunehmende Szene mit moduliertem Licht beleuchtet wird oder mittels eines Laserstrahls abgetastet wird.
In dem Aufsatz "Image and Depth from a Conventional Camera with a Coded Aperture" von Levin et al., veröffentlicht in "ACM Transactions on Graphics", Vol. 26, Issue 3, 2007, ist ein Verfahren zur Gewinnung von Tiefeninformation beschrieben, bei dem im Bereich des für die Bildaufnahme verwendeten Objektivs eine sogenannte codierte Apertur vorgesehen ist. Eine solche codierte Apertur besteht aus einer Maske, bei der undurchlässige Maskierungsabschnitte strukturiert angeordnet sind. Das Grundprinzip des in dem vorstehend genannten Aufsatz von Levin et al. beschriebenen Verfahrens beruht auf dem Effekt, dass eine Linse oder ein Objektiv einen Punkt im Objektraum (entsprechend einer punktförmigen "Lichtquelle") nur dann als Punkt in der Bildebene abbildet, wenn sich der Punkt in der Fokusebene der Linse oder des Objektivs befindet. Befindet sich der Punkt bzw. die punktförmige "Lichtquelle" hingegen in einem anderen Abstand von der Linse oder dem Objektiv, so wird der Punkt unscharf abgebildet und es wird ein Unschärfekreis in der Bildebene erzeugt, dessen Durchmesser proportional zum Abstand der Lichtquelle von der Fokusebene ist.

Mittels einer Dekonvolution oder Entfaltung der aufgenommenen Bilder ist es möglich, die durch die oben beschriebene tiefenabhängige Defokussierung bedingte Unschärfe aus dem Bild herauszurechnen, wobei zugleich Informationen über das Maß der Unschärfe und damit in Folge auch über den Abstand der aufgenommenen Objekte gewonnen werden können. Eine optische Abbildung kann nämlich im Prinzip als Konvolution oder Faltung einer das abzubildende Objekt beschreibenden Funktion mit einem Kern (englisch: Kernel) beschrieben werden, wobei der Kern die optischen Eigenschaften des abbildenden Elements beschreibt.

Bei dem Verfahren nach Levin et al. wird der Kern unter anderem durch die Struktur der codierten Apertur charakterisiert. Letztlich erhöht die Verwendung einer codierten Apertur mit einer relativ komplexen Struktur gegenüber der bei herkömmlichen Objektiven zumeist kreisförmigen oder irisartigen Apertur die Genauigkeit bei der Berechnung der Dekonvolution bzw. ermöglicht überhaupt deren Berechnung.

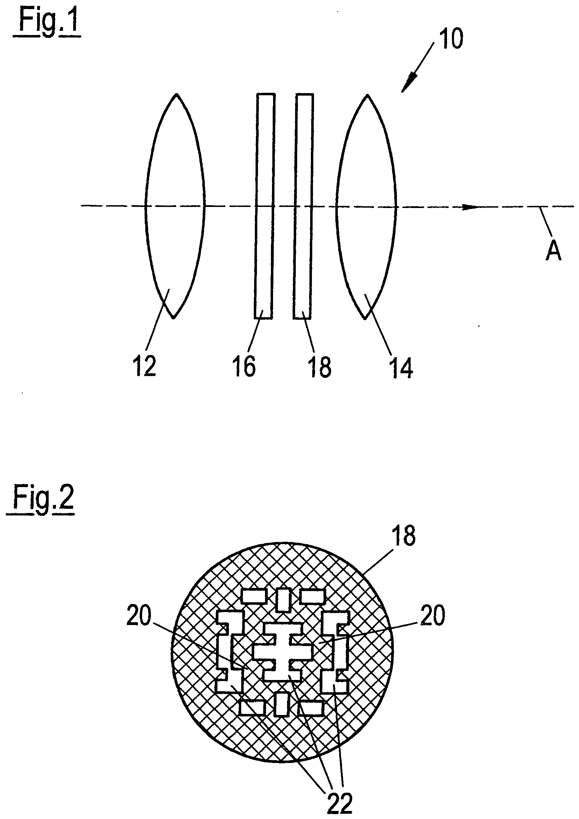

In dem Aufsatz von Levin et al. werden die Anforderungen an die Struktur einer codierten Apertur näher beschrieben. Diese werden durch eine Struktur erfüllt, wie sie die beispielhaft in Fig. 2 dargestellte codierte Apertur bzw. Maske aufweist. Bei dieser Maske wechseln sich transparente Abschnitte und strahlungsundurchlässige, in Fig. 2 schraffiert dargestellte Maskierungsabschnitte ab.

Bei der Aufnahme von Bildern unter Verwendung von codierten Aperturen kann jedoch die für die Gewinnung der Tiefeninformationen an sich erwünschte Beeinflussung der Unschärfefigur von Objekten, die sich nicht in der Fokusebene befinden, zu ästhetisch unerwünschten Effekten führen. So weisen unscharf abgebildete Lichtquellen, insbesondere Spitzlichter oder Glanzlichter, ungewöhnliche Strukturen auf, die nicht kreisrund sind, sondern mit der Struktur der Maske moduliert sind. Diese Effekte können zwar nachträglich rechnerisch korrigiert werden. Allerdings sind diese Effekte zumindest während der Aufnahme bei Verwendung eines elektronischen Suchers (unmittelbare Wiedergabe des Aufnahmebildes) störend.

Weiterhin verringert sich durch die Maskierungsabschnitte die Aperturfläche oder freie Öffnung des Objektivs und vermindert dadurch dessen Lichtstärke.

Weitere Verfahren und/oder Einrichtungen zur Gewinnung von Tiefeninformation sind in US 2008/259354 A1, US 2006/092314 A1 und US 2010/066854 A1 beschrieben.

Es ist daher die Aufgabe der Erfindung, ein Kameraobjektiv und ein Kamerasystem anzugeben, welche zur Bestimmung der Tiefeninformation mittels einer codierten Apertur ausgelegt sind und welche hinsichtlich der Abbildungsqualität und der Lichtstärke verbessert sind.

Die Aufgabe der Erfindung wird durch ein Kameraobjektiv mit den Merkmalen des Anspruchs 1 gelöst, welcher ein Kameraobjektiv mit einer Maske mit mehreren Maskierungsabschnitten betrifft, welche für Strahlung eines ersten Spektralbereichs durchlässig und für Strahlung eines zweiten, vom ersten Spektralbereich verschiedenen Spektralbereichs undurchlässig sind.
Mit diesem Kameraobjektiv lassen sich von Objekten, welche elektromagnetische Strahlung sowohl im ersten Spektralbereich als auch im zweiten Spektralbereich reflektieren oder emittieren, Bilder erzeugen, deren in den ersten Spektralbereich fallende Bildanteile von der Maske unbeeinflusst sind, während die Strahlungsanteile im zweiten Spektralbereich beim Durchtritt durch das Objektiv mittels der Maske codiert sind, wie es für eine Anwendung des in dem Aufsatz von Levin et al. beschriebenen Verfahrens zur Gewinnung der Tiefeninformation erforderlich ist.
Letztlich werden also zwei einander überlagerte Bilder erzeugt, von denen das im ersten Spektralbereich aufgenommene Bild uncodiert ist und weitgehend einem mit einem herkömmlichen Kameraobjektiv ohne Maske erzeugten Bild entspricht, während die Bildinformationen des in dem zweiten Spektralbereich aufgenommenen Bildes mit der Struktur der Maske codiert bzw. gefaltet sind, sodass aus diesen in einem nachfolgenden Berechnungsschritt die gewünschten Tiefeninformationen gewonnen werden können.
Die genannte Maske ist vorzugsweise im Strahlengang in einer Ebene senkrecht zur optischen Achse angeordnet. Die Maskierungsabschnitte sind für elektromagnetische Strahlung des ersten Spektralbereichs (beispielsweise sichtbares Licht) vollständig oder zumindest im Wesentlichen (d.h. ohne die Bildqualität signifikant beeinträchtigende Absorptionsverluste) durchlässig. Für elektromagnetische Strahlung des zweiten, von dem ersten Spektralbereich verschiedenen Spektralbereichs hingegen sind die Maskierungsabschnitte absorbierend und/oder reflektierend und somit vollständig oder im Wesentlichen undurchlässig.

Da die Maske für den ersten Spektralbereich mehr oder weniger vollständig durchlässig ist, wird die Lichtstärke des Kameraobjektivs für diesen Spektralbereich nicht oder nur unwesentlich beeinflusst. Weil in diesem Spektralbereich auch keine Faltung mit der Maskenstruktur erfolgt, wird auch eine ästhetisch unerwünschte Beeinflussung der Abbildungsqualität vermieden. In dem ersten Spektralbereich erfolgt somit keine spürbare Beeinträchtigung der Bildqualität. Die in dem zweiten Spektralbereich gewonnene Bildinformation gestattet hingegen die Ermittlung von Tiefeninformationen.

Die aus dem codierten Bild gewonnenen Tiefeninformationen können auf geeignete Weise dem uncodierten Bild zugeordnet werden, so dass daraus beispielsweise eine Tiefenkarte erstellt werden kann. Je nach Auflösung kann die Zuordnung bildpunktweise oder für Bildteilbereiche, d.h. für Gruppen von Bildpunkten erfolgen. Eine Trennung der beiden überlagerten Bilder wird nachfolgend noch näher erläutert.

Erfindungsgemäß sind der erste Spektralbereich durch zumindest einen Spektralbereich sichtbarer Strahlung (d.h. Licht) und der zweite Spektralbereich durch zumindest einen Spektralbereich nicht sichtbarer Strahlung, insbesondere infraroter oder ultravioletter Strahlung gebildet. Durch diese Wahl der Spektralbereiche wird die Abbildung im Bereich des visuellen Lichts durch die Maske nicht beeinträchtigt. Die für die Anwendung des Verfahrens nach Levin et al. erforderliche Codierung erfolgt lediglich in einem für das menschliche Auge nicht sichtbaren Spektralbereich.

Gemäß einer weiteren vorteilhaften Ausführungsform ist die Maske zwischen beiden Hauptebenen des Kameraobjektivs angeordnet, insbesondere innerhalb einer Blende des Objektivs oder unmittelbar an eine Blende des Objektivs angrenzend. Somit erfordert die Integration der Maske in eine existierende Kameraobjektivkonstruktion nur geringe bauliche Anpassungen. Beispielsweise wäre es auch möglich, die Blende und die Maske zu einer Baueinheit zusammenzufassen.

Gemäß einer weiteren vorteilhaften Ausführungsform sind die Maskierungsabschnitte freitragend oder auf einem Träger ausgebildet. Bei freitragenden Maskierungsabschnitten wird die Einbringung von zusätzlichen, die Abbildungsqualität des Objektivs beeinträchtigenden Grenzflächen eines Trägers in den Strahlengang vermieden. Eine Anordnung der Maskierungsabschnitte auf einem insbesondere für beide Spektralbereiche transparenten Träger gewährleistet hingegen eine höhere mechanische Stabilität und gewährt größere Freiheiten bei der Ausgestaltung der Struktur, da keine Beschränkung auf zusammenhängende Maskierungsabschnitte wie bei einer freitragenden Struktur gegeben ist.

Vorteilhaft ist, wenn dem Kameraobjektiv ein Datenspeicher zugeordnet ist, welcher ausgelegt ist, Daten zu speichern, die die Maske kennzeichnen. Dadurch ist es möglich, in dem Objektiv selbst eine Information über die in dem Objektiv vorgesehene Maske zu hinterlegen und diese den aufgenommenen Bildern zuzuordnen, sodass bei einer späteren Auswertung der codierten Bilder die korrekte Maskenstruktur zugrunde gelegt werden kann. Somit können für verschiedene Objektive unterschiedliche Masken verwendet werden, wobei stets die Information über die tatsächlich verwendete Maske vorhanden ist.

Vorteilhaft ist ferner, wenn das Kameraobjektiv dazu ausgebildet ist, einen an dem Kameraobjektiv eingestellten Fokussierungswert auszugeben. Dadurch ist es möglich, aus dem Objektiv selbst eine Information über den an dem Objektiv eingestellten Fokussierungswert auszulesen und diese den aufgenommenen Bildern zuzuordnen, sodass bei einer späteren Auswertung der codierten Bilder ein absoluter Tiefenwert berechnet werden kann. Als Fokussierungswert wird der am Objektiv eingestellte Abstand der Fokusebene von der Kamera bezeichnet, d.h. derjenige Abstand einer Lichtquelle zu der Kamera, in dem diese Lichtquelle scharf abgebildet wird. Das von Levin beschriebene Verfahren ermöglicht es zunächst nur, relative Tiefenwerte zu ermitteln, die auf den am Objektiv eingestellten Fokussierungswert normiert sind, d.h. für eine sich in der Fokusebene befindende Lichtquelle beträgt der relative Tiefenwert Null. Wenn der nach dem Levin'schen Verfahren ermittelte (relative) Tiefenwert und der Fokussierungswert kombiniert, insbesondere addiert werden, ergibt sich daraus der absolute Tiefenwert, d.h. der tatsächliche Abstand der Lichtquelle von der Kamera. Die Ausgabe des Fokussierungswerts durch das Objektiv ermöglicht es, diesen bei einer späteren Auswertung der codierten Bilder zu berücksichtigen.

Die Aufgabe der Erfindung wird ferner durch ein Kamerasystem mit den Merkmalen des Anspruchs 6 gelöst und insbesondere durch ein Kamerasystem mit einer digitalen Kamera, insbesondere einer digitalen Filmkamera, zum Aufnehmen von Bildern, welche gekennzeichnet ist durch ein Kameraobjektiv der vorstehend erläuterten Art und durch eine optoelektronische Sensoranordnung mit einer Vielzahl von Sensorelementen zur Erzeugung von belichtungsabhängigen Empfangssignalen, die ein jeweiliges Bild bilden, wobei die Vielzahl von Sensorelementen eine erste Gruppe von Sensorelementen zur Erzeugung von Empfangssignalen in Abhängigkeit von Strahlung des ersten Spektralbereichs, nicht jedoch des zweiten Spektralbereichs, und eine zweite Gruppe von Sensorelementen zur Erzeugung von Empfangssignalen in Abhängigkeit von Strahlung des zweiten Spektralbereichs, nicht jedoch des ersten Spektralbereichs, umfasst. Dies bedeutet, dass die von den Sensorelementen der ersten Gruppe erzeugten Empfangssignale im Wesentlichen lediglich der Strahlung des ersten Spektralbereichs entsprechen (für die die Maskierungsabschnitte der Maske durchlässig sind), und dass die von den Sensorelementen der zweiten Gruppe erzeugten Empfangssignale im Wesentlichen lediglich der Strahlung des zweiten Spektralbereichs entsprechen (für die die Maskierungsabschnitte der Maske undurchlässig sind). Dadurch ist es möglich, ein durch die Strahlung des ersten Spektralbereichs erzeugtes, uncodiertes Bild von einem durch die Strahlung des zweiten Spektralbereichs erzeugten, mittels der Maske codierten Bild zu trennen.

Eine Trennung der Strahlung in den ersten Spektralbereich und den zweiten Spektralbereich kann generell durch wenigstens eine Filtereinrichtung erfolgen, die zwischen dem Kameraobjektiv und der Sensoranordnung (z.B. separates Filterelement) oder unmittelbar an der Sensoranordnung vorgesehen ist (z.B. Filterbeschichtung auf Pixelebene). Alternativ oder zusätzlich kann für eine spektrale Trennung der das Kameraobjektiv passierenden Strahlung auch eine unterschiedliche inhärente spektrale Empfindlichkeit der verwendeten Sensorelemente ausgenutzt werden (beispielsweise von dem verwendeten Halbleitermaterial abhängig).

Vorteilhafterweise umfasst die Sensoranordnung zwei separate Sensoren, wobei ein erster Sensor die Sensorelemente der ersten Gruppe von Sensorelementen und ein zweiter Sensor die Sensorelemente der zweiten Gruppe von Sensorelementen umfasst. Hier werden also zwei räumlich getrennte Sensoren eingesetzt, was den Vorteil hat, dass die Sensoren für den jeweiligen zu erfassenden Spektralbereich hinsichtlich ihrer Empfindlichkeit optimiert werden können. Vorzugsweise ist der eine der beiden Sensoren auf der optischen Hauptachse des Kamerasystems, d.h. auf der optischen Achse des Kameraobjektivs angeordnet, während der andere der beiden Sensoren auf einer Achse angeordnet ist, die beispielsweise senkrecht zu der optischen Hauptachse ausgerichtet ist.

Bei einer derartigen Ausführungsform mit zwei separaten Sensoren ist zwischen dem Kameraobjektiv und den zwei Sensoren vorzugsweise ein Strahlteiler angeordnet, welcher ausgebildet ist, einen Teil einer das Kameraobjektiv passierenden Strahlung zu einem der beiden Sensoren zu leiten und einen anderen Teil der das Kameraobjektiv passierenden Strahlung zu dem anderen der beiden Sensoren zu leiten, insbesondere in einer permanenten Aufteilung oder im Zeit-Multiplex. Optional kann der Strahlteiler zugleich die genannte Trennung der Strahlung in den ersten Spektralbereich und den zweiten Spektralbereich durchführen, d.h. der Strahlteiler kann wellenlängenselektiv wirksam sein. In diesem Fall leitet der Strahlteiler Strahlung des ersten Spektralbereichs im Wesentlichen lediglich auf den ersten Sensor und/oder Strahlung des zweiten Spektralbereichs im Wesentlichen lediglich auf den zweiten Sensor.

Als permanent wirksamer Strahlteiler kann beispielsweise ein Strahlteilerspiegel oder ein sogenannter Strahlteilerwürfel verwendet werden, welcher beispielsweise aus miteinander verklebten Prismen besteht. Ein derartiger permanent wirksamer Strahlteiler umfasst vorzugsweise eine Filtereinrichtung, die für die Strahlung des einen der beiden Spektralbereiche durchlässig ist und die Strahlung des anderen der beiden Spektralbereiche reflektiert. Alternativ hierzu kann als ein im Zeit-Multiplex wirksamer Strahlteiler eine rotierende Spiegelblende eingesetzt werden, deren Rotationsachse schräg zur optischen Hauptachse des Kamerasystems ausgerichtet ist, und die zumindest einen transmittierenden und einen reflektierenden Sektor aufweist, so dass die beiden Sensoren in Abhängigkeit von der Winkelstellung der Spiegelblende abwechselnd belichtet werden. Vorzugsweise ist die rotierende Spiegelblende bezüglich der beiden Spektralbereiche im Wesentlichen in gleicher Weise wirksam, d.h. die Anteile der in Richtung des einen Sensors und des anderen Sensors geleiteten Strahlung sind für die beiden Spektralbereiche im Wesentlichen gleich, ohne dass an der Spiegelblende eine spezielle Filtereinrichtung vorgesehen ist. Eine Trennung der Strahlung in den ersten Spektralbereich und den zweiten Spektralbereich erfolgt in diesem Fall durch eine nachgeordnete Filtereinrichtung und/oder durch eine unterschiedliche inhärente spektrale Empfindlichkeit der beiden Sensoren.

Gemäß einer alternativen Ausführungsform umfasst die Sensoranordnung einen einzigen Sensor, der die Sensorelemente der ersten und der zweiten Gruppe umfasst, wobei die erste Gruppe von Sensorelementen im Wesentlichen nur in dem ersten Spektralbereich und die zweite Gruppe von Sensorelementen im Wesentlichen nur in dem zweiten Spektralbereich empfindlich ist (aufgrund einer geeigneten Filtereinrichtung und/oder einer unterschiedlichen inhärenten spektralen Empfindlichkeit). Ein derartiger Sensor kann beispielsweise in Art eines Bayer-Sensors aufgebaut sein. Bei herkömmlichen Bayer-Sensoren ist auf jedem Sensorelement ein Farbfilter für eine der drei Grundfarben Rot, Grün oder Blau in einer regelmäßigen, matrixförmigen Struktur vorgesehen. Üblicherweise sind 50 % der Sensorelemente für grün empfindlich, während je 25 % der Sensorelemente für rot und blau empfindlich sind. Ein derartiger Bayer-Sensor wird nun beispielsweise so abgewandelt, dass nur noch 25 % der Sensorelemente für grün empfindlich sind und die restlichen 25 % im infraroten Spektralbereich empfindlich sind. Die Sensorelemente mit roten, grünen und blauen Filtern bilden somit die erste Gruppe, während die mit Infrarotfiltern versehenen Sensorelemente die zweite Gruppe bilden. Ein derartiger Sensor weist den Vorteil auf, dass die jeweiligen Bilder der beiden Spektralbereiche automatisch die erforderliche Deckungsgenauigkeit aufweisen. Allerdings wird der auf die Sensorelemente der ersten Gruppe auftreffende Infrarotanteil nicht genutzt, während umgekehrt der auf die Sensorelemente der zweiten Gruppe auftreffende Anteil im sichtbaren Spektralbereich nicht genutzt wird.

Gemäß einer vorteilhaften Ausführungsform weist das Kamerasystem ferner eine Auswerteeinheit auf, welche dazu ausgebildet ist, auf der Grundlage einer Unschärfe eines von der zweiten Gruppe von Sensorelementen aufgenommenen Bildes für einen jeweiligen Bildpunkt oder einen Bildteilbereich einen Tiefenwert zu ermitteln. Die Auswerteeinheit ist demnach ausgelegt, insbesondere das vorstehend erläuterte, von Levin et al. beschriebene und hier einbezogene Verfahren zur Bestimmung der Tiefenwerte durchzuführen. Die Tiefenwerte entsprechen dabei jeweils dem Abstand der Kamera zu einem Gegenstandspunkt oder Gegenstandsteilbereich, welcher oder welche dem Bildpunkt oder dem Bildteilbereich zugeordnet sind. Die ermittelten Tiefenwerte können somit zur weiteren Verarbeitung der Bildinformation herangezogen werden, welche anhand der Empfangssignale der ersten Gruppe von Sensorelementen gewonnen worden ist.

Gemäß einer weiteren vorteilhaften Ausführungsform ist die Auswerteeinheit mit dem vorgenannten Datenspeicher des Kameraobjektivs verbunden oder verbindbar, um die in dem Datenspeicher gespeicherten Daten auszulesen, welche die verwendete Maske kennzeichnen, und/oder die Auswerteeinrichtung ist dazu ausgelegt, den vorgenannten, vom Kameraobjektiv ausgegebenen Fokussierungswert zu empfangen. Die Auswerteeinrichtung ist in diesen beiden Fällen ferner dazu ausgelegt, den Tiefenwert zusätzlich auf der Grundlage der aus dem Datenspeicher ausgelesenen Daten und/oder auf der Grundlage des von dem Kameraobjektiv empfangenen Fokussierungswerts zu ermitteln. Hierdurch ist sichergestellt, dass der rechnerischen Bestimmung der Tiefenwerte stets die korrekte Maskenstruktur zugrunde gelegt bzw. ein korrekter absoluter Tiefenwert berechnet wird.

Gemäß einer weiteren vorteilhaften Ausführungsform weist das Kamerasystem eine Steuereinrichtung auf, welche dazu ausgebildet ist, die in dem vorgenannten Datenspeicher des Kameraobjektivs gespeicherten Daten (welche die verwendete Maske kennzeichnen) auszulesen. Die Steuereinrichtung gibt diese Daten gemeinsam mit den aus den Empfangssignalen erzeugten Bilddaten an einem Ausgang der Kamera aus (z.B. an einen externen Speicher), oder die Steuereinrichtung veranlasst, dass die aus dem Datenspeicher des Kameraobjektivs ausgelesenen Daten gemeinsam mit den Bilddaten in Speichermitteln des Kamerasystems gespeichert werden. Hierdurch ist ebenfalls sichergestellt, dass der rechnerischen Bestimmung der Tiefenwerte stets die korrekte Maskenstruktur zugrunde gelegt werden kann, selbst wenn diese Bestimmung erst nachträglich außerhalb des Kamerasystems erfolgt.

Gemäß einer weiteren vorteilhaften Ausführungsform weist das Kamerasystem ferner eine Beleuchtungsvorrichtung zur Beleuchtung von aufzunehmenden Objekten mit räumlich modulierter, insbesondere räumlich periodisch modulierter Beleuchtungsstrahlung des zweiten Spektralbereichs auf. Dadurch kann insbesondere bei Objekten mit nur geringer Textur die Genauigkeit der Tiefenwertbestimmung verbessert werden, da den Objekten durch die modulierte oder strukturierte Beleuchtung eine zusätzliche Textur aufgeprägt wird.

Weitere vorteilhafte Ausführungsformen der Erfindung sind in den Unteransprüchen, der Beschreibung und den Zeichnungen angegeben. Die Erfindung wird nachfolgend anhand von Ausführungsbeispielen mit Bezug auf die Zeichnungen beschrieben. Gleiche oder gleichartige Elemente sind darin mit denselben Bezugszeichen gekennzeichnet. Es zeigt:
- Fig. 1: eine schematische Darstellung eines erfindungsgemäßen Kameraobjektivs,
- Fig. 2: eine schematische Darstellung einer Maske des Kameraobjektivs von Fig. 1,
- Fig. 3: ein erfindungsgemäßes Kamerasystem gemäß einem ersten Ausführungsbeispiel,
- Fig. 4: einen jeweiligen Ausschnitt einer schematischen Darstellung der beiden Sensoren des Kamerasystems gemäß dem ersten und zweiten Ausführungsbeispiel,
- Fig. 5: ein erfindungsgemäßes Kamerasystem gemäß einem zweiten Ausführungsbeispiel,
- Fig. 6: ein erfindungsgemäßes Kamerasystem gemäß einem dritten Ausführungsbeispiel, und
- Fig. 7: einen Ausschnitt einer schematischen Darstellung eines Sensors des Kamerasystems gemäß dem dritten Ausführungsbeispiel.

Fig. 1 zeigt schematisch ein erfindungsgemäßes Kameraobjektiv 10, welches eine Frontlinse 12 und eine Rücklinse 14 umfasst, welche auf einer optischen Achse A angeordnet sind. Zwischen den Linsen 12, 14 ist eine beispielsweise als Irisblende ausgebildete Kamerablende 16 angeordnet. In Richtung des Abbildungsstrahlengangs gesehen unmittelbar hinter der Kamerablende 16 ist eine Maske 18 angeordnet. Selbstverständlich kann das Kameraobjektiv 10 auch mehr oder weniger als die zwei dargestellten Linsen 12, 14 umfassen. Grundsätzlich können sowohl die Kamerablende 16 als auch die Maske 18 auch an anderer Stelle im Kameraobjektiv 10 angeordnet sein. Insbesondere können Kamerablende 16 und Maske 18 auch miteinander vertauscht sein.

Gemäß Fig. 2 umfasst die Maske 18 eine Struktur von mehreren Maskierungsabschnitten 20, welche für Strahlung im sichtbaren Spektralbereich (d.h. für sichtbares Licht) im Wesentlichen durchlässig sind, nicht jedoch für Strahlung in einem nicht sichtbaren Spektralbereich, beispielsweise im infraroten Spektralbereich (d.h. für Infrarotstrahlung). Mit anderen Worten sind die Maskierungsabschnitte 20 im infraroten Spektralbereich weitestgehend absorbierend und/oder reflektierend. Die Maske weist ferner zu den Maskierungsabschnitten 20 komplementäre Durchlassabschnitte 22 auf, welche sowohl für das sichtbare Licht als auch für die Infrarotstrahlung durchlässig sind. Die Maskierungsabschnitte 20 können (wie dargestellt) freitragend ausgebildet sein oder auf einem Träger (nicht dargestellt) angeordnet sein. Beispielsweise können die Maskierungsabschnitte 20 durch eine auf einem Glasträger aufgebrachte dichroitische Filterschicht gebildet sein.

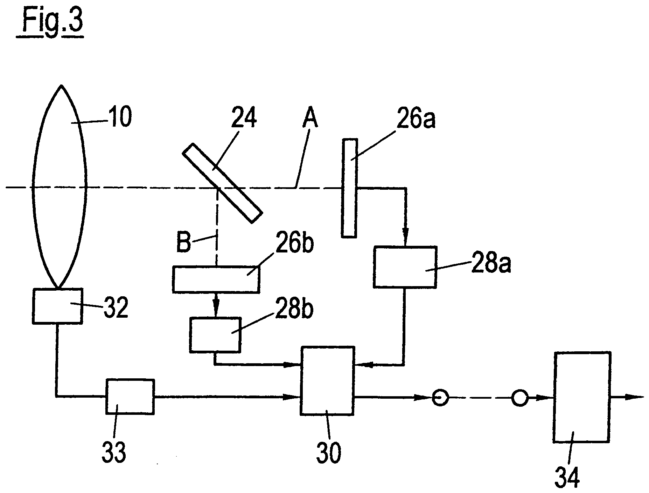

Ein erfindungsgemäßes Kamerasystem nach einem ersten Ausführungsbeispiel umfasst gemäß Fig. 3 ein auf der optischen Achse A angeordnetes Kameraobjektiv 10. Ebenfalls auf der optischen Achse befindet sich ein Sensor 26a, welcher für sichtbares Licht empfindlich ist. Dabei kann es sich beispielsweise um einen herkömmlichen CMOS-Sensor handeln, welcher Sensorelemente aufweist, die aufgrund einer geeigneten Filterbeschichtung jeweils für rotes, grünes und blaues Licht empfindlich sind.

Zwischen dem Kameraobjektiv 10 und dem Sensor 26a ist in einem Winkel von beispielsweise 45° zur optischen Achse A ein Strahlteiler 24 vorgesehen, welcher das sichtbare Licht auf den Sensor 26a permanent durchlässt, während die infrarote Strahlung in Richtung eines Sensors 26b permanent reflektiert wird. Der Sensor 26b ist auf einer zur optischen Achse A beispielsweise senkrechten Nebenachse B angeordnet und ist zum Beispiel ein für Infrarotstrahlung empfindlicher CMOS-Sensor.

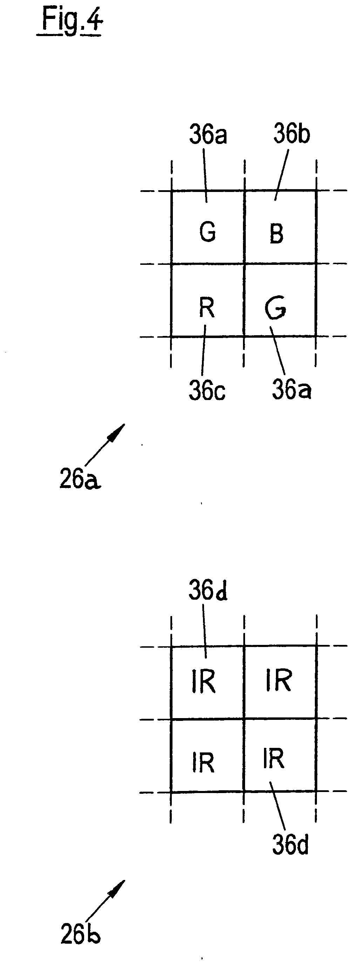

Fig. 4 zeigt einen jeweiligen Teilabschnitt der Sensoren 26a und 26b. Der Sensor 26a ist mit einem Bayer-Farbfiltermuster versehen, wobei eine Matrix aus 2 x 2 Sensorelementen 36a bis 36c sich periodisch über die Fläche des Sensors 26a wiederholt. D.h. auf den Sensorelementen 36a bis 36c sind verschiedene Farbfilter aufgebracht, sodass das Sensorelement 36a für grünes Licht, das Sensorelement 36b für blaues Licht und das Sensorelement 36c für rotes Licht empfindlich ist. In Abhängigkeit von der Trennschärfe des spektral unterschiedlich wirksamen Strahlteilers 24 kann dem Sensor 26a zusätzlich ein Infrarot-Sperrfilter zugeordnet sein (in Fig. 3 und 4 nicht gezeigt). Fig. 4 zeigt ferner, dass sämtliche Sensorelemente 36d des Sensors 26b im Wesentlichen ausschließlich für Infrarotstrahlung empfindlich sind. Dies kann durch eine entsprechende Wahl des verwendeten Halbmaterials erreicht werden, d.h. der Sensor 26b ist inhärent nur für infrarote Strahlung empfindlich.

Der Strahlteiler 24 gemäß Fig. 3 ist beispielsweise als dichroitischer Kurzpass-Strahlteilerspiegel ausgebildet, welcher das visuelle Licht transmittiert, während die im Vergleich dazu langwelligere Infrarotstrahlung reflektiert wird. Alternativ kann auch ein Langpass-Strahlteilerspiegel verwendet werden, bei dem die Infrarotstrahlung transmittiert und das visuelle Licht reflektiert wird. In dem Fall wären die Sensoren 26a, 26b zu vertauschen. Anstelle eines Strahlteilerspiegels können auch ein aus Prismen zusammengesetzter Strahlteilerwürfel oder andere geeignete Strahlteiler verwendet werden.

Die von den Sensoren 26a, 26b belichtungsabhängig erzeugten Signale werden in einer jeweiligen Signalverarbeitungseinheit 28a, 28b in an sich bekannter Weise verarbeitet. Die Signalverarbeitung umfasst insbesondere eine Digitalisierung der Empfangssignale. Aus den Empfangssignalen erzeugte Bilder werden in Form von digitalen Bilddaten in einem Bildspeicher 30 gespeichert, welcher sowohl als interne, in der Kamera integrierte Einheit als auch als externe, mit der Kamera verbindbare Einheit ausgebildet sein kann.

Das Kameraobjektiv 10 weist optional einen Datenspeicher 32 auf, in dem Objektividentifizierungsdaten gespeichert sind. Diese Objektividentifizierungsdaten können mittels einer Steuereinrichtung 33 dem Bildspeicher 30 zugeführt werden und zusammen mit den jeweiligen Bilddaten der Sensoren 26a, 26b und Signalverarbeitungseinheiten 28a, 28b als kombinierter Datensatz hinterlegt werden. Dadurch ist es möglich, bei einer späteren Auswertung der Bilder eindeutig nachzuvollziehen, mit welchem Kameraobjektiv und mit welchen Objektiveinstellungen (z.B. Fokussierungswert, Brennweite oder Blende) diese Bilder erzeugt wurden. Insbesondere können diese Objektividentifizierungsdaten solche Daten umfassen, welche eine Identifizierung der in dem Kameraobjektiv 10 verwendeten Maske 18 ermöglichen. Dabei kann es sich um einen Maskenidentifikationscode, aber auch um ein Bild der Maske handeln. Zur Ermittlung des Fokussierungswerts weist das Kameraobjektiv 10 optional eine entsprechende Messeinrichtung (nicht dargestellt) auf, mittels der z.B. die Stellung eines Fokus-Skalenrings elektronisch auslesbar ist. Der Fokussierungswert kann sowohl unmittelbar ausgegeben als auch im Datenspeicher 32 zwischengespeichert werden.

Die in dem Bildspeicher 30 gespeicherten Bilddaten können an eine Auswerteeinheit 34 übermittelt werden, welche wie hier dargestellt als externe Einheit ausgebildet ist. Die Auswerteeinheit 34 ist dazu ausgelegt, nach dem eingangs erwähnten, in dem Aufsatz von Levin et al. ausführlich beschriebenen Verfahren aus den von dem Sensor 26b erzeugten Infrarot-Bildern Tiefeninformationen zu ermitteln und diese den von dem Sensor 26a erzeugten zugehörigen visuellen Bildern zuzuordnen. Die notwendigen Informationen über die Maskenstruktur können entweder aus in der Auswerteeinheit 34 hinterlegten Maskenstrukturinformationen, insbesondere Abbildungen verschiedener Masken, gewonnen werden, die mittels des mit den Bilddaten hinterlegten Maskenidentifikationscodes zugeordnet werden können, oder die Informationen über die Maskenstruktur werden direkt aus zusammen mit den Bilddaten gespeicherten Abbildungen der Maske gewonnen.

Grundsätzlich ist es auch möglich, die Auswerteeinheit 34 in das Kamerasystem zu integrieren. In beiden Fällen kann die Auswertung der Bilddaten gleichzeitig mit ihrer Aufnahme oder zeitversetzt erfolgen.

Gemäß einer Abwandlung des Ausführungsbeispiels von Fig. 3 ist der Strahlteiler 24 nicht wellenlängenselektiv wirksam, d.h. im Wesentlichen unabhängig von der Wellenlänge der das Kameraobjektiv 10 passierenden Strahlung lässt der Strahlteiler 24 einen Teil der Strahlung zu dem Sensor 26a durch und reflektiert einen anderen Teil der Strahlung in Richtung des Sensors 26b. Insbesondere kann der Strahlteiler 24 hierfür als teildurchlässiger Spiegel oder Strahlteilerwürfel ausgebildet sein. Bei dieser Abwandlung erfolgt bezüglich der Strahlungseinfallrichtung nach dem Strahlteiler 24 eine geeignete Filterung, beispielsweise durch ein Infrarot-Sperrfilter (d.h. einen Kurzpassfilter) vor oder an dem Sensor 26a und/oder einen Langpassfilter vor oder an dem Sensor 26b.

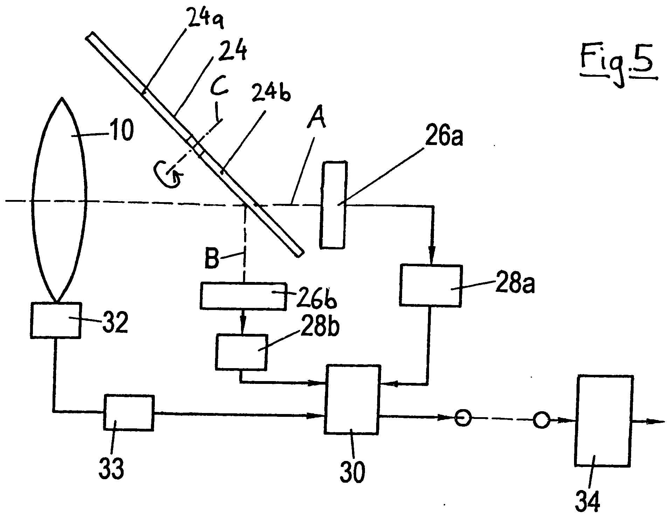

Gemäß einer weiteren Abwandlung des Ausführungsbeispiels von Fig. 3 kann im Strahlengang anstelle eines Strahlteilerspiegels als Strahlteiler 24, der nach dem Zeitmultiplex-Prinzip wirksam ist, eine rotierende Spiegelblende vorgesehen sein. Eine derartige Spiegelblende rotiert um eine beispielsweise um 45° zur optischen Achse A geneigte Achse C, wie in Fig. 5 dargestellt ist. Eine derartige Spiegelblende weist einen oder mehrere strahlungsdurchlässige Sektoren 24a auf (z.B. mit einer jeweiligen Durchbrechung), während der oder die übrigen Sektoren 24b reflektierend ausgebildet sind. Eine derartige Spiegelblende ist aus der DE 102 10 327 A1 bekannt, um bei einer elektronischen Filmkamera einen optischen Sucher zu ermöglichen.

Auch eine derartige Spiegelblende kann für die beiden Spektralbereiche in gleicher Weise wirksam sein. In Abhängigkeit von der Winkelstellung der rotierenden Spiegelblende trifft dann die gesamte von dem Kameraobjektiv 10 durchgelassene Strahlung abwechselnd entweder auf den Sensor 26a oder den Sensor 26b. Der Aufbau der Sensoren 26a und 26b kann insbesondere wieder jenem gemäß Fig. 4 entsprechen. Hierbei kann beispielsweise der Sensor 26b mit einem Filter versehen sein, das lediglich die Infrarotstrahlung passieren lässt (Langpassfilter), und/oder der Sensor 26a ist zusätzlich zu dem in Fig. 4 gezeigten Bayer-Farbfiltermuster mit einem Filter versehen, das lediglich sichtbares Licht passieren lässt (Kurzpassfilter). Alternativ oder zusätzlich hierzu kann eine spektrale Trennung durch eine unterschiedliche inhärente spektrale Empfindlichkeit der verwendeten Sensoren 26a, 26b vorgesehen sein.

Die im Zusammenhang mit dem ersten Ausführungsbeispiel gemäß Fig. 3 erläuterte Funktionsweise (mit Signalverarbeitungseinheiten 28a, 28b, Bildspeicher 30, optionalem Datenspeicher 32 und Steuereinrichtung 33, externer oder interner Auswerteeinheit 34) trifft auch auf das zweite Ausführungsbeispiel gemäß Fig. 5 zu.

Ein Vorteil der zweiten Ausführungsform gemäß Fig. 5 (mit rotierender Spiegelblende) gegenüber dem ersten Ausführungsbeispiel gemäß Fig. 3 (mit Strahlteilerspiegel) besteht darin, dass beide Sensoren 26a, 26b zum Zeitpunkt der jeweiligen Strahlungsbeaufschlagung eine maximale Strahlungsmenge (Intensität) des betreffenden Spektralbereichs erhalten. Ferner kann erreicht werden, dass die Empfangssignale des Sensors 26a für das sichtbare Licht im Falle einer Verschmutzung des Strahlteilers 24 keine Beeinträchtigung erfahren, nämlich wenn die diesem Sensor 26a zugeordneten Sektoren 24a der Spiegelblende als Durchbrechungen ausgebildet sind. Mit anderen Worten befindet sich zum Zeitpunkt der Lichtbeaufschlagung des Sensors 26a kein Objekt im Strahlengang zwischen dem Kameraobjektiv 10 und dem Sensor 26a. Sofern die Spiegelblende nicht wellenlängenselektiv wirksam ist, ergibt sich ein besonders einfacher Aufbau. Im Rahmen der Erfindung ist es allerdings auch möglich, dass die rotierende Spiegelblende entsprechend dem Strahlteiler 24 gemäß Fig. 3 ein spektral unterschiedliches Transmissions- und Reflexionsvermögen besitzt.

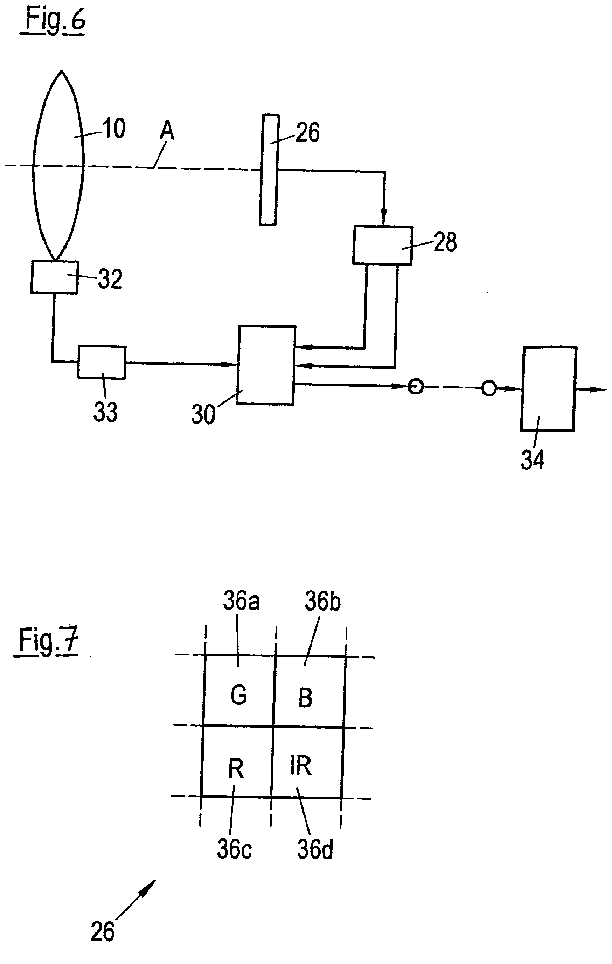

Ein Kamerasystem nach einem dritten Ausführungsbeispiel umfasst gemäß Fig. 6 ein erfindungsgemäßes Kameraobjektiv 10, welches vorzugsweise ebenfalls einen Datenspeicher 32 aufweist. Auf der optischen Achse A ist hinter dem Kameraobjektiv 10 ein einziger Sensor 26 angeordnet, welcher eine Vielzahl von Sensorelementen aufweist, die entweder im visuellen Spektralbereich oder im infraroten Spektralbereich empfindlich sind.

Ein Teilabschnitt des Sensors 26 ist in Fig. 7 dargestellt. Eine Matrix aus 2 x 2 Sensorelementen 36a bis 36d wiederholt sich periodisch über die Fläche des Sensors 26. Auf den Sensorelementen 36a bis 36d sind jeweils verschiedene Filter aufgebracht, sodass das Sensorelement 36a für grünes Licht, das Sensorelement 36b für blaues Licht und das Sensorelement 36c für rotes Licht empfindlich ist. Ein viertes Sensorelement 36d ist ausschließlich für Infrarotstrahlung empfindlich.

Gemäß Fig. 6 werden die von dem Sensor 26 erzeugten Empfangssignale an eine Signalverarbeitungseinheit 28 übermittelt, in der die Empfangssignale unter anderem digitalisiert werden. Weiterhin kann die Signalverarbeitungseinheit 28 dazu ausgelegt sein, aus den von den Sensorelementen 36a bis 36c erzeugten Empfangssignalen ein jeweiliges visuelles Bild zu erzeugen, während aus den Empfangssignalen der Sensorelemente 36d ein jeweiliges Infrarot-Bild erzeugt wird. Entsprechende (Interpolations-)-Verfahren sind für derartige Sensoren des Bayer-Typs allgemein bekannt.

Beide Bilddatensätze (Sichtbar und Infrarot) werden an den Bildspeicher 30 übermittelt und auf die vorstehend mit Bezug auf Fig. 3 beschriebene Weise mit den in dem Datenspeicher 32 gespeicherten Objektividentifizierungsdaten verknüpft. Auch die Auswertung in der Auswerteeinheit 34 erfolgt auf die mit Bezug auf Fig. 3 beschriebene Weise.

Ein erfindungsgemäßes Kamerasystem gemäß einem der genannten Ausführungsbeispiele erlaubt es, mit einem einzigen Kameraobjektiv 10, in dem eine als Maske 18 ausgebildete codierte Apertur vorgesehen ist, gleichzeitig ein Bild im visuellen Spektralbereich zu erzeugen, das von der Maske 18 im Wesentlichen unbeeinflusst ist und daher keine ästhetisch nachteiligen Bildfehler aufweist, und ein durch die Maske 18 codiertes Bild im infraroten Spektralbereich aufzunehmen, aus dem mittels geeigneter Verfahren Tiefeninformationen zur Erzeugung einer Tiefenkarte zu ermitteln, welche zu dem visuellen Bild kongruent oder deckungsgleich ist. Da nur ein Objektiv verwendet wird, passt sich der Messbereich zur Erzeugung der Tiefenkarte automatisch an den betrachteten Bildbereich bezüglich des Bildwinkels und/oder der Entfernung an, wenn der Fokus des Objektivs oder bei einem Zoom-Objektiv die Brennweite geändert wird oder wenn das Objektiv selbst gewechselt wird. Parallaxenfehler werden vermieden.

Optional kann eine strukturierte Infrarotbeleuchtung vorgesehen werden, mittels der ein Punkt- oder Linienmuster auf die aufzunehmende Szene projiziert wird. Im Gegensatz zu dem eingangs erwähnten Triangulationsverfahren muss der Basisabstand zwischen der Infrarotbeleuchtung und der Kamera nicht bekannt sein. Durch die strukturierte Beleuchtung wird hauptsächlich der Texturierungsgrad der aufzunehmenden Objekte vergrößert, was wiederum die Genauigkeit der mittels Dekonvolution gewonnenen Tiefeninformation verbessert. In entsprechender Weise kann eine Vorrichtung zur Erzeugung von strukturierter Ultraviolettbeleuchtung vorgesehen sein.

Zur Erhöhung der Beleuchtungsstärke im Infrarotbereich oder Ultraviolettbereich kann alternativ oder zusätzlich auch eine unstrukturierte Infrarotbeleuchtung oder Ultraviolettbeleuchtung vorgesehen werden.

### Bezugszeichenliste

- 10: Kameraobjektiv
- 12: Frontlinse
- 14: Rücklinse
- 16: Kamerablende
- 18: Maske
- 20: Maskierungsabschnitt
- 22: Durchlassabschnitt
- 24: Strahlteiler
- 24a, 24b: Sektor des Strahlteilers
- 26, 26a, 26b: Sensor
- 28, 28a, 28b: Signalverarbeitungseinheit
- 30: Bildspeicher
- 32: Datenspeicher
- 33: Steuereinrichtung
- 34: Auswerteeinheit
- 36a-36d: Sensorelement

- A: optische Achse
- B: Nebenachse

## Patentansprüche

1. Kameraobjektiv, mit einer Maske (18) mit mehreren Maskierungsabschnitten (20), welche für Strahlung eines ersten Spektralbereichs durchlässig und für Strahlung eines zweiten, vom ersten Spektralbereich verschiedenen Spektralbereichs undurchlässig sind, und welche in einer von einer kreisförmigen Apertur verschiedenen Struktur angeordnet sind, sodass die Maske (18) eine codierte Apertur bildet,
wobei die Maske (18) zu den Maskierungsabschnitten (20) komplementäre Durchlassabschnitte (22) aufweist, welche sowohl für Strahlung des ersten Spektralbereichs als auch für Strahlung des zweiten Spektralbereichs durchlässig sind,
**dadurch gekennzeichnet,**
**dass** der erste Spektralbereich durch zumindest einen Spektralbereich sichtbarer Strahlung gebildet ist, und dass der zweite Spektralbereich durch zumindest einen Spektralbereich nicht sichtbarer Strahlung gebildet ist.

2. Kameraobjektiv nach Anspruch 1,
**dadurch gekennzeichnet,**
**dass** der zweite Spektralbereich durch zumindest einen Spektralbereich infraroter oder ultravioletter Strahlung gebildet ist.

3. Kameraobjektiv nach einem der vorhergehenden Ansprüche,
**dadurch gekennzeichnet,**
**dass** die Maske (18) zwischen den beiden Hauptebenen des Kameraobjektivs (10) angeordnet ist, insbesondere innerhalb einer Blende (16) des Kameraobjektivs (10) oder unmittelbar an eine Blende (16) des Kameraobjektivs (10) angrenzend.

4. Kameraobjektiv nach einem der vorhergehenden Ansprüche,
**dadurch gekennzeichnet,**
**dass** die Maskierungsabschnitte (20) freitragend oder auf einem Träger ausgebildet sind.

5. Kameraobjektiv nach einem der vorhergehenden Ansprüche,
**dadurch gekennzeichnet,**
**dass** dem Kameraobjektiv (10) ein Datenspeicher (32) zugeordnet ist, welcher ausgelegt ist, die Maske (18) kennzeichnende Daten zu speichern, und/oder
**dass** das Kameraobjektiv (10) dazu ausgebildet ist, einen an dem Kameraobjektiv (10) eingestellten Fokussierungswert auszugeben.

6. Kamerasystem, mit einer digitalen Kamera, insbesondere einer digitalen Filmkamera, zum Aufnehmen von Bildern,
**gekennzeichnet durch**
ein Kameraobjektiv (10) nach einem der vorhergehenden Ansprüche, und
**durch** eine optoelektronische Sensoranordnung (26, 26a, 26b) mit einer Vielzahl von Sensorelementen (36a-36d) zur Erzeugung von belichtungsabhängigen Empfangssignalen, die ein jeweiliges Bild bilden,
wobei die Vielzahl von Sensorelementen (36a-36d) eine erste Gruppe von Sensorelementen (36a-36c) zur Erzeugung von Empfangssignalen in Abhängigkeit von Strahlung des ersten Spektralbereichs, nicht jedoch des zweiten Spektralbereichs, und eine zweite Gruppe von Sensorelementen (36d) zur Erzeugung von Empfangssignalen in Abhängigkeit von Strahlung des zweiten Spektralbereichs, nicht jedoch des ersten Spektralbereichs, umfasst.

7. Kamerasystem nach Anspruch 6,
**dadurch gekennzeichnet,**
**dass** die Sensoranordnung zwei separate Sensoren (26a, 26b) umfasst, wobei ein erster Sensor (26a) die Sensorelemente der ersten Gruppe von Sensorelementen und ein zweiter Sensor (26b) die Sensorelemente der zweiten Gruppe von Sensorelementen umfasst, wobei zwischen dem Kameraobjektiv (10) und den zwei Sensoren (26a, 26b) ein Strahlteiler (24) angeordnet ist, welcher ausgebildet ist, einen Teil einer das Kameraobjektiv (10) passierenden Strahlung zu einem der beiden Sensoren (26a, 26b) zu leiten und einen anderen Teil der das Kameraobjektiv (10) passierenden Strahlung zu dem anderen der beiden Sensoren (26a, 26b) zu leiten.

8. Kamerasystem nach Anspruch 7,
**dadurch gekennzeichnet,**
**dass** der Strahlteiler (24) einen Strahlteilerspiegel oder einen Strahlteilerwürfel umfasst,
wobei der Strahlteiler (24) vorzugsweise eine Filtereinrichtung umfasst, die für die Strahlung des einen der beiden Spektralbereiche durchlässig ist und die Strahlung des anderen der beiden Spektralbereiche reflektiert.

9. Kamerasystem nach Anspruch 7,
**dadurch gekennzeichnet,**
**dass** der Strahlteiler (24) eine rotierende Spiegelblende mit einer Rotationsachse umfasst, die schräg zu einer optischen Achse (A) des Kameraobjektivs (10) ausgerichtet ist, wobei die Spiegelblende zumindest einen transmittierenden Sektor (24a) aufweist, der eine das Kameraobjektiv (10) passierende Strahlung zu einem der beiden Sensoren (26a, 26b) durchlässt, und wobei die Spiegelblende zumindest einen reflektierenden Sektor (24b) aufweist, der eine das Kameraobjektiv (10) passierende Strahlung in Richtung des anderen der beiden Sensoren (26a, 26b) reflektiert, so dass die beiden Sensoren in Abhängigkeit von der Winkelstellung der Spiegelblende abwechselnd belichtet werden.

10. Kamerasystem nach Anspruch 9,
**dadurch gekennzeichnet,**
**dass** zwischen der Spiegelblende und wenigstens einem der beiden Sensoren (26a, 26b) eine Filtereinrichtung vorgesehen ist, die lediglich für Strahlung eines der beiden Spektralbereiche, nicht jedoch für Strahlung des anderen der beiden Spektralbereiche durchlässig ist;
und/oder
**dass** der erste Sensor (26a) mit einer Filtereinrichtung versehen ist, die lediglich für Strahlung des ersten Spektralbereichs, nicht jedoch für Strahlung des zweiten Spektralbereichs durchlässig ist; und/oder
**dass** der zweite Sensor (26b) mit einer Filtereinrichtung versehen ist, die lediglich für Strahlung des zweiten Spektralbereichs, nicht jedoch für Strahlung des ersten Spektralbereichs durchlässig ist; und/oder
**dass** die Sensorelemente (36a-36c) des ersten Sensors (26a) inhärent nur in dem ersten Spektralbereich empfindlich sind; und/oder
**dass** die Sensorelemente (36d) des zweiten Sensors (26b) inhärent nur in dem zweiten Spektralbereich empfindlich sind; und/oder
**dass** wenigstens einer der Sektoren (24a, 24b) der Spiegelblende eine Filtereinrichtung umfasst, die lediglich für Strahlung eines der beiden Spektralbereiche, nicht jedoch für Strahlung des anderen der beiden Spektralbereiche durchlässig ist.

11. Kamerasystem nach Anspruch 6,
**dadurch gekennzeichnet,**
**dass** die Sensoranordnung einen einzigen Sensor (26) umfasst, der die Sensorelemente (36a-36d) der ersten und der zweiten Gruppe umfasst,
wobei vorzugsweise wenigstens eine der beiden Gruppen von Sensorelementen (36a-36d) mit einer Filtereinrichtung versehen ist, die lediglich für Strahlung des einen der beiden Spektralbereiche, nicht jedoch für Strahlung des anderen der beiden Spektralbereiche durchlässig ist.

12. Kamerasystem nach einem der Ansprüche 6 bis 11,
**dadurch gekennzeichnet,**
**dass** das Kamerasystem ferner eine Auswerteeinheit (34) aufweist, welche dazu ausgebildet ist, auf der Grundlage einer Unschärfe eines von der zweiten Gruppe von Sensorelementen (36d) aufgenommenen Bildes für einen jeweiligen Bildpunkt oder einen Bildteilbereich einen Tiefenwert zu ermitteln.

13. Kamerasystem nach Anspruch 12,
**dadurch gekennzeichnet,**
**dass** dem Kameraobjektiv (10) ein Datenspeicher (32) zugeordnet ist, welcher ausgelegt ist, die Maske (18) kennzeichnende Daten zu speichern, wobei die Auswerteeinheit (34) mit dem Datenspeicher (32) des Kameraobjektivs (10) verbunden oder verbindbar ist, um die in dem Datenspeicher (32) gespeicherten, die Maske (18) kennzeichnenden Daten auszulesen, wobei die Auswerteeinheit (34) dazu ausgelegt ist, den Tiefenwert zusätzlich auf der Grundlage der aus dem Datenspeicher (32) ausgelesenen Daten zu ermitteln; und/oder
**dass** das Kameraobjektiv (10) dazu ausgebildet ist, einen an dem Kameraobjektiv (10) eingestellten Fokussierungswert auszugeben, wobei die Auswerteeinheit (34) dazu ausgebildet ist, den vom Kameraobjektiv (10) ausgegebenen Fokussierungswert zu empfangen und den Tiefenwert zusätzlich auf der Grundlage des empfangenen Fokussierungswerts zu ermitteln;
und / oder
**dass** dem Kameraobjektiv (10) ein Datenspeicher (32) zugeordnet ist, welcher ausgelegt ist, die Maske (18) kennzeichnende Daten zu speichern, wobei das Kamerasystem ferner eine Steuereinrichtung (33) aufweist, welche dazu ausgelegt ist, die in dem Datenspeicher (32) gespeicherten, die Maske (18) kennzeichnende Daten auszulesen und gemeinsam mit den aus den Empfangssignalen erzeugten Bilddaten an einem Ausgang der Kamera auszugeben oder in Speichermitteln (30) des Kamerasystems zu speichern.

14. Kamerasystem nach einem der Ansprüche 6 bis 13,
**dadurch gekennzeichnet,**
**dass** das Kamerasystem ferner eine Beleuchtungsvorrichtung zur Beleuchtung von aufzunehmenden Objekten mit räumlich modulierter, insbesondere räumlich periodisch modulierter Beleuchtungsstrahlung des zweiten Spektralbereichs aufweist.

## Claims

1. A camera objective having a mask (18) with a plurality of masking sections (20) which are permeable for radiation of a first spectral range and impermeable for radiation of a second spectral range different from the first spectral range and which are arranged in a structure different from a circular aperture such that the mask (18) forms a coded aperture,
wherein the mask (18) has passage sections (22) which are complementary to the masking sections (20) and which are permeable both for radiation of the first spectral range and for radiation of the second spectral range,
**characterized in that**
the first spectral range is formed by at least one spectral range of visible radiation; and **in that** the second spectral range is formed by at least one spectral range of non-visible radiation.

2. A camera objective in accordance with claim 1,
**characterized in that**
the second spectral range is formed by at least one spectral range of infrared or ultraviolet radiation.

3. A camera objective in accordance with one of the preceding claims,
**characterized in that**
the mask (18) is arranged between the two main planes of the camera objective (10), in particular within a diaphragm (16) of the camera objective (10) or directly adjacent to a diaphragm (16) of the camera objective (10).

4. A camera objective in accordance with any one of the preceding claims,
**characterized in that**
the masking sections (20) are configured self-supporting or on a carrier.

5. A camera objective in accordance with any one of the preceding claims,
**characterized in that**
a data memory (32) is associated with the camera objective (10) and is designed to store data characterizing the mask (18); and/or in that the camera objective (10) is configured to output a focusing value set at the camera objective (10).

6. A camera system having a digital camera, in particular a digital motion picture camera, for taking images,
**characterized by**
a camera objective (10) in accordance with any one of the preceding claims; and
by an optoelectronic sensor arrangement (26, 26a, 26b) having a plurality of sensor elements (36a-36d) for generating exposure-dependent received signals which form a respective image, wherein the plurality of sensor elements (36a-36d) comprise a first group of sensor elements (36a-36c) for generating received signals in dependence on radiation of the first spectral range, but not of the second spectral range, and a second group of sensor elements (36d) for generating received signals in dependence on radiation of the second spectral range, but not of the first spectral range.

7. A camera system in accordance with claim 6,
**characterized in that**
the sensor arrangement comprises two separate sensors (26a, 26b), wherein a first sensor (26a) comprises the sensor elements of the first group of sensor elements and a second sensor (26b) comprises the sensor elements of the second group of sensor elements, wherein a beam splitter (24) is arranged between the camera objective (10) and the two sensors (26a, 26b) and is configured to direct a portion of radiation passing through the camera objective (10) to one of the two sensors (26a, 26b) and to direct another portion of the radiation passing through the camera objective (10) to the other of the two sensors (26a, 26b).

8. A camera system in accordance with claim 7,
**characterized in that**
the beam splitter (24) comprises a beam splitter mirror or a beam splitter cube,
wherein the beam splitter (24) preferably comprises a filter device which is permeable for the radiation of the one of the two spectral ranges and which reflects the radiation of the other of the two spectral ranges.

9. A camera system in accordance with claim 7,
**characterized in that**
the beam splitter (24) comprises a rotating mirror shutter having an axis of rotation which is aligned obliquely to an optical axis (A) of the camera objective (10), wherein the mirror shutter has at least one transmitting sector (24a) which transmits radiation passing through the camera objective (10) to one of the two sensors (26a, 26b); and wherein the mirror shutter has at least one reflective sector (24b) which reflects radiation passing through the camera objective (10) in the direction of the other of the two sensors (26a, 26b) so that the two sensors are exposed alternately in dependence on the angular position of the mirror shutter.

10. A camera system in accordance with claim 9,
**characterized in that**
a filter device is provided between the mirror shutter and at least one of the two sensors (26a, 26b) and is only permeable for radiation of one of the two spectral ranges, but not for radiation of the other of the two spectral ranges;
and/or
**in that** the first sensor (26a) is provided with a filter device which is only permeable for radiation of the first spectral range, but not for radiation of the second spectral range;
and/or
**in that** the second sensor (26b) is provided with a filter device which is only permeable for radiation of the second spectral range, but not for radiation of the first spectral range;
and/or
**in that** the sensor elements (36a-36c) of the first sensor (26a) are inherently only sensitive in the first spectral range;
and/or
**in that** the sensor elements (36d) of the second sensor (26b) are inherently only sensitive in the second spectral range;
and/or
**in that** at least one of the sectors (24a, 24b) of the mirror shutter comprises a filter device which is only permeable for radiation of one of the two spectral ranges, but not for radiation of the other of the two spectral ranges.

11. A camera system in accordance with claim 6,
**characterized in that**
the sensor arrangement comprises a single sensor (26) which comprises the sensor elements (36a-36d) of the first and second groups,
wherein at least one of the two groups of sensor elements (36a-36d) is preferably provided with a filter device which is only permeable for radiation of the one of the two spectral ranges, but not for radiation of the other of the two spectral ranges.

12. A camera system in accordance with any one of the claims 6 to 11,
**characterized in that**
the camera system furthermore has an evaluation unit (34) which is configured to determine a depth value for a respective picture element or a partial picture region on the basis of a blur of an image taken by the second group of sensor elements (36d).

13. A camera system in accordance with claim 12,
**characterized in that**
a data memory (32) is associated with the camera objective (10) and is designed to store data characterizing the mask (18), wherein the evaluation unit (34) is connected or connectable to the data memory (32) of the camera objective (10) to read out the data stored in the data memory (32) and characterizing the mask (18), wherein the evaluation unit (34) is designed to additionally determine the depth value on the basis of the data read out of the data memory (32); and/or
**in that** the camera objective (10) is configured to output a focusing value set at the camera objective (10), wherein the evaluation unit (34) is configured to receive the focusing value output by the camera objective (10) and to additionally determine the depth value on the basis of the received focusing value;
and/or
**in that** a data memory (32) is associated with the camera objective (10) and is designed to store data characterizing the mask (18), wherein the camera system furthermore has a control device (33) which is designed to read out the data stored in the data memory (32) and characterizing the mask (18) and to output them together with image data generated from the received signals at an output of the camera or to store them in memory means (30) of the camera system.

14. A camera system in accordance with any one of the claims 6 to 13,
**characterized in that**
the camera system further has a lighting apparatus to light objects to be taken using spatially modulated lighting radiation of the second spectral range, in particular using spatially periodically modulated lighting radiation of the second spectral range.

## Revendications

1. Objectif de caméra, comportant un masque (18) à plusieurs portions de masquage (20) qui sont perméables au rayonnement d'une première gamme spectrale et imperméables au rayonnement d'une seconde gamme spectrale différente de la première gamme spectrale, et qui sont agencées dans une structure qui se distingue d'une ouverture circulaire, de telle sorte que le masque (18) forme une ouverture encodée,
dans lequel le masque (18) comprend des portions de passage (22) complémentaires aux portions de masquage (20), qui sont perméables aussi bien au rayonnement de la première gamme spectrale qu'au rayonnement de la seconde gamme spectrale,
**caractérisé en ce que**
la première gamme spectrale est formée par au moins une gamme spectrale de rayonnement visible,
et **en ce que** la seconde gamme spectrale est formée par au moins une gamme spectrale de rayonnement non visible.

2. Objectif de caméra selon la revendication 1,
**caractérisé en ce que**
la seconde gamme spectrale est formée par au moins une gamme spectrale de rayonnement infrarouge ou ultraviolet.

3. Objectif de caméra selon l'une des revendications précédentes,
**caractérisé en ce que**
le masque (18) est agencé entre les deux plans principaux de l'objectif de caméra (10), en particulier à l'intérieur d'un diaphragme (16) de l'objectif de caméra (10) ou de façon directement adjacente à un diaphragme (16) de l'objectif de caméra (10).

4. Objectif de caméra selon l'une des revendications précédentes,
**caractérisé en ce que**
les portions de masquage (20) sont en porte-à-faux ou réalisés sur un support.

5. Objectif de caméra selon l'une des revendications précédentes,
**caractérisé en ce que**
une mémoire de données (32) est associée à l'objectif de caméra (10), qui est conçue pour mémoriser des données caractérisant le masque (18), et/ou
**en ce que** l'objectif de caméra (10) est conçu pour émettre une valeur de focalisation réglée sur l'objectif de caméra (10).

6. Système de caméra, comportant une caméra numérique, en particulier une caméra vidéo numérique, pour prendre des images,
**caractérisé par**
un objectif de caméra (10) selon l'une des revendications précédentes
et
par un agencement de capteur optoélectronique (26, 26a, 26b) comportant une multitude d'éléments capteurs (36a - 36d) pour générer des signaux de réception dépendants de l'exposition, qui constituent une image respective, dans lequel la multitude d'éléments capteurs (36a - 36d) comprend un premier groupe d'éléments capteurs (36a - 36c) pour générer des signaux de réception en fonction du rayonnement de la première gamme spectrale, mais non pas de la seconde gamme spectrale, et un second groupe d'éléments capteurs (36d) pour générer des signaux de réception en fonction du rayonnement de la seconde gamme spectrale, mais non pas de la première gamme spectrale.

7. Système de caméra selon la revendication 6,
**caractérisé en ce que**
l'agencement capteur comprend deux capteurs séparés (26a, 26b), un premier capteur (26a) comprenant les éléments capteurs du premier groupe d'éléments capteurs et un second capteur (26b) comprenant les éléments capteurs du second groupe d'éléments capteurs,
et entre l'objectif de caméra (10) et les deux capteurs (26a, 26b), il est prévu un diviseur de faisceau (24) qui est conçu pour faire passer une partie d'un rayonnement traversant l'objectif de caméra (10) vers l'un des deux capteurs (26a, 26b) et pour faire passer une autre partie du rayonnement traversant l'objectif de caméra (10) vers l'autre des deux capteurs (26a, 26b).

8. Système de caméra selon la revendication 7,
**caractérisé en ce que**
le diviseur de faisceau (24) comprend un miroir diviseur de faisceau ou un cube diviseur de faisceau,
dans lequel le diviseur de faisceau (24) comprend de préférence un moyen de filtrage qui est perméable au rayonnement de l'une des deux gammes spectrales et qui réfléchit le rayonnement de l'autre des deux gammes spectrales.

9. Système de caméra selon la revendication 7,
**caractérisé en ce que**
le diviseur de faisceau (24) comprend un diaphragme à miroir rotatif ayant un axe de rotation qui est dirigé en oblique par rapport à un axe optique (A) de l'objectif de caméra (10), dans lequel le diaphragme à miroir comprend au moins un secteur transmetteur (24a) qui laisse passer un rayonnement traversant l'objectif de caméra (10) vers l'un des deux capteurs (26a, 26b), et le diaphragme à miroir comprend au moins un secteur réfléchissant (24b) qui réfléchit un rayonnement traversant l'objectif de caméra (10) en direction de l'autre des deux capteurs (26a, 26b), de sorte que les deux capteurs sont exposés en alternance en fonction de la position angulaire du diaphragme à miroir.

10. Système de caméra selon la revendication 9,
**caractérisé en ce que**
un moyen de filtrage est prévu entre le diaphragme à miroir et l'un au moins des deux capteurs (26a, 26b), qui est perméable uniquement au rayonnement de l'une des deux gammes spectrales, mais non pas au rayonnement de l'autre des deux gammes spectrales ;
et/ou
**en ce que** le premier capteur (26a) est pourvu d'un moyen de filtrage qui est perméable uniquement au rayonnement de la première gamme spectrale, mais non pas au rayonnement de la seconde gamme spectrale ; et/ou
**en ce que** le second capteur (26b) est pourvu d'un moyen de filtrage qui est perméable uniquement au rayonnement de la seconde gamme spectrale, mais non pas au rayonnement de la première gamme spectrale ; et/ou
**en ce que** les éléments capteurs (36a - 36c) du premier capteur (26a) sont sensibles de façon inhérente uniquement dans la première gamme spectrale ;
et/ou
**en ce que** les éléments capteurs (36d) du second capteur (26b) sont sensibles de façon inhérente uniquement dans la seconde gamme spectrale ; et/ou
l'un au moins des secteurs (24a, 24b) du diaphragme à miroir comprend un moyen de filtrage qui est perméable uniquement au rayonnement de l'une des deux gammes spectrales, mais non pas au rayonnement de l'autre des deux gammes spectrales.

11. Système de caméra selon la revendication 6,
**caractérisé en ce que**
l'agencement de capteur comprend un unique capteur (26) qui comprend les éléments capteurs (36a - 36d) du premier et du second groupe, dans lequel de préférence l'un au moins des deux groupes d'éléments capteurs (36a - 36d) est pourvu d'un moyen de filtrage qui est perméable uniquement au rayonnement de l'une des deux gammes spectrales, mais non pas au rayonnement de l'autre des deux gammes spectrales.

12. Système de caméra selon l'une des revendications 6 à 11,
**caractérisé en ce que**
le système de caméra comprend en outre une unité d'évaluation (34) qui est conçue pour déterminer une valeur de profondeur pour un point d'image respectif ou pour une zone partielle de l'image en se basant sur un flou d'une image prise par le second groupe d'éléments capteurs (36d).

13. Système de caméra selon la revendication 12,
**caractérisé en ce que**
une mémoire de données (32) est associée à l'objectif de caméra (10), qui est conçue pour mémoriser des données caractérisant le masque (18), l'unité d'évaluation (34) étant connectée ou étant apte à être connectée à la mémoire de données (32) de l'objectif de caméra (10), afin de lire les données caractérisant le masque (18) et mémorisées dans la mémoire de données (32),
dans lequel l'unité d'évaluation (34) est conçue pour déterminer la valeur de profondeur en supplément en se basant sur les données lues dans la mémoire de données (32) ;
et/ou
l'objectif de caméra (10) est conçu pour émettre une valeur de focalisation réglée sur l'objectif de caméra (10),
dans lequel l'unité d'évaluation (34) est réalisée pour recevoir la valeur de focalisation émise par l'objectif de caméra (10) et pour déterminer en supplément la valeur de profondeur en se basant sur la valeur de focalisation reçue ;
et/ou
une mémoire de données (32) est associée à l'objectif de caméra (10), qui est conçue pour mémoriser des données caractérisant le masque (18), le système de caméra comprenant en outre un moyen de commande (33) qui est conçu pour lire les données caractérisant le masque (18) mémorisées dans la mémoire de données (32) et pour les émettre, conjointement avec les données d'image générées à partir des signaux de réception, à une sortie de la camera ou pour les mémoriser dans des moyens de mémorisation (30) du système de caméra.

14. Système de caméra selon l'une des revendications 6 à 13,
**caractérisé en ce que**
le système de caméra comprend en outre un dispositif d'éclairage pour éclairer des objets à prendre avec un rayonnement d'éclairage modulé dans l'espace, en particulier modulé périodiquement dans l'espace, de la seconde gamme spectrale.
